(19) Europäisches Patentamt
European Patent Office
Office européen des brevets

(11) **EP 1 824 793 B1**

(12) **FASCICULE DE BREVET EUROPEEN**

(45) Date de publication et mention
de la délivrance du brevet:
**30.09.2015  Bulletin 2015/40**

(21) Numéro de dépôt: **05819410.1**

(22) Date de dépôt: **21.11.2005**

(51) Int Cl.:
**C03B 5/235** (2006.01)      **F27B 3/20** (2006.01)

(86) Numéro de dépôt international:
**PCT/FR2005/050970**

(87) Numéro de publication internationale:
**WO 2006/061530 (15.06.2006 Gazette 2006/24)**

(54) **PROCEDE DE FUSION D'UNE COMPOSITION DE MATIERES PREMIERES PAR UN BRULEUR EN VOUTE**

VERFAHREN ZUM SCHMELZEN EINER ZUSAMMENSETZUNG AUS ROHMATERIALIEN MIT EINEM BOGENBRENNER

METHOD FOR MELTING A COMPOSITION OF RAW MATERIALS WITH AN ARCHED BURNER

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **09.12.2004  FR 0452913**

(43) Date de publication de la demande:
**29.08.2007  Bulletin 2007/35**

(73) Titulaire: **L'AIR LIQUIDE, Société Anonyme pour l'Etude
et l'Exploitation des Procédés Georges Claude
75007 Paris (FR)**

(72) Inventeur: **TSIAVA, Rémi Pierre
F-91250 ST GERMAIN LES CORBEIL (FR)**

(74) Mandataire: **De Vleeschauwer, Natalie Y.L.D.
L'Air Liquide S.A.
Direction de Propriété Intellectuelle
75 Quai d'Orsay
75321 Paris Cedex 07 (FR)**

(56) Documents cités:
**EP-A- 0 546 238      EP-A- 0 710 798
US-A- 6 109 062**

## Description

La présente invention concerne un procédé de fusion d'une composition de matières premières à l'aide d'un brûleur placé dans la voûte d'un four.

De nombreux procédés industriels comprennent une étape de fusion de matières premières, notamment pour élaborer des matériaux qui n'existent pas à l'état naturel, ou qui existent à l'état naturel en quantités insuffisantes ou avec un faible niveau de pureté. Des métaux et des alliages sont ainsi élaborés en métallurgie. De même, des verres, des frittes et des émaux sont produits industriellement en fondant des compositions vitrifiables. En particulier, les installations industrielles de fabrication de verre plat, notamment de type sodocalcique, comprennent des fours de fusion dont les capacités et les dimensions sont très importantes.

Dans le domaine de la fusion, on appelle composition un mélange de matières premières dont les proportions sont déterminées en fonction du matériau que l'on cherche à obtenir. La composition se présente en général sous la forme d'une poudre sensiblement homogène, à peu près sèche et désagrégée.

Pour obtenir un débit important de matière fondue, on utilise un four de grande capacité en régime continu. La composition est introduite de façon continue dans la cuve du four sur un premier côté de celui-ci, et la matière fondue est soutirée, aussi de façon continue, sur un second côté du four, en général opposé au premier côté. L'un des enjeux majeurs des installations de ce type réside dans la continuité et la stabilité des conditions de fusion, dont résulte, notamment, l'homogénéité de la matière fondue qui est obtenue.

Une enfourneuse est utilisée pour verser la composition dans la cuve, au dessus du niveau de remplissage de celle-ci, sous forme d'un rideau de largeur déterminée. Le flux de composition ainsi enfournée est sensiblement constant et réparti régulièrement sur toute la largeur d'enfournement. Etant donné que la composition enfournée est moins dense que la matière fondue, la composition qui est encore pulvérulente stagne à la surface du bain de fusion. Une couche de composition est ainsi formée, qui flotte sur le bain. Cette couche est poussée lentement en direction de l'aval du four par le flux permanent de composition qui continue à être versé.

Lorsque la couche de composition parvient à un endroit de la cuve où la température est suffisamment élevée, la composition contenue dans la couche fond selon un front bien défini. Ce front de fusion, couramment appelé talus, est la limite de la couche de composition. De façon générale, la forme et l'orientation du front de fusion résultent de mécanismes complexes qui sont peu ou mal contrôlés. La convexion du liquide de fusion à l'intérieur du bain et les courants gazeux au-dessus du bain font partie de ces mécanismes.

Un chauffage par combustion est souvent utilisé pour de tels fours. Pour cela, un ou plusieurs brûleurs sont disposés au-dessus de la cuve du four. La stabilité des conditions de fusion dépend alors de façon critique de nombreux paramètres, tels que la disposition des brûleurs, leur nombre, la proportion entre le combustible et le comburant utilisés, la distance entre la (les) flamme(s) du (des) brûleur(s) et le niveau de remplissage de la cuve, etc.

Lorsqu'un brûleur d'un type décrit dans l'une des demandes de brevets européens 1 319 150, 0 546 238, ou 0 748 981 est utilisé, une flamme étroite est obtenue. Lorsque celle-ci est dirigée vers la couche de composition, un front de fusion est obtenu dans une zone limitée d'impact de la flamme. En régime permanent de fonctionnement du four, le front de fusion de la couche de composition présente alors une forme en V ouverte en direction de l'aval du four. Des portions distinctes de composition sont donc fondues à des endroits du four correspondant à des niveaux différents d'avancement selon la direction d'enfournement, ce qui provoque des écarts de conditions de fusion de la composition. En outre, des mottes de composition s'écroulent aléatoirement sur le front de composition, tombant d'un seul coup dans le bain de matière fondue. Le talus est alors érodé irrégulièrement, ce qui engendre des déplacements incontrôlés du front de fusion. Le fonctionnement du four est alors instable.

Il est possible de disposer, perpendiculairement à la direction d'enfournement, plusieurs brûleurs identiques au précédent pour repousser l'ensemble du front de fusion dans une partie amont du four. Le nombre de brûleurs utilisés rend une telle solution onéreuse et difficile à mettre en oeuvre, notamment à cause de la fréquence des interventions de maintenance de brûleurs qui sont alors nécessaires.

Un but de la présente invention consiste donc à proposer un procédé de fusion qui ne présente pas les inconvénients cités ci-dessus, ou pour lequel ces inconvénients sont réduits.

Pour cela, l'invention propose un procédé de fusion d'une composition de matières premières qui comprend les étapes suivantes :

- introduire la composition dans un four selon une direction d'enfournement parallèle à un axe central longitudinal du four, en répartissant la composition de façon sensiblement continue et régulière sur une largeur d'enfournement déterminée, afin de former une couche de composition sur la surface du bain de fusion, et
- disposer un brûleur à oxycombustion au-dessus du bain de fusion, le brûleur étant dirigé vers la couche de composition, de façon à créer un front de fusion de la composition présente dans la couche.

Le procédé comprend en outre un ajustement de paramètres du brûleur, effectué de sorte que :

- le brûleur produise une flamme plate ayant une section transversale allongée horizontalement ;

- le plan contenant une section longitudinale de la flamme et une direction horizontale perpendiculaire à l'axe du four coupe le front de fusion de la composition à une hauteur comprise entre le tiers et la moitié de l'épaisseur de la couche de composition, à partir de la surface du bain de fusion, et coupe la surface du bain de fusion selon une droite perpendiculaire à l'axe du four ; et
- la flamme produise un transfert thermique au front de fusion de la composition essentiellement par rayonnement.

Ainsi, dans un procédé selon l'invention, les paramètres du brûleur sont ajustés de façon à obtenir une flamme large et couvrante dirigée vers le front de fusion. En outre, étant donné que le transfert thermique de la flamme au front de fusion de la composition est essentiellement réalisé par rayonnement, ce transfert a lieu dans une partie importante de la largeur du four au niveau du front de fusion. Le front de fusion présente alors une grande portion rectiligne orientée perpendiculairement à l'axe longitudinal du four.

Une partie principale de la composition est ainsi fondue à un même niveau d'avancement dans le four, selon l'axe longitudinal de celui-ci. De plus, les conditions de fusion sont sensiblement identiques pour des portions de composition situées à des endroits différents de la partie rectiligne du front de fusion. La composition est alors fondue de façon continue et régulière, dans des conditions particulièrement stables. En particulier, aucun écroulement brutal de mottes de composition ne se produit plus sur la partie rectiligne du front de fusion.

Cette stabilité résulte aussi du fait que la forme et l'orientation du front de fusion sont fixées par la nature de la flamme générée par le brûleur. La configuration du front de fusion ne dépend plus que faiblement de phénomènes incontrôlés tels que la convexion de la matière liquide contenue dans la cuve du four, ou bien tels que les courants gazeux provoqués par la flamme juste au-dessus de la couche de composition. Les conditions de fusion de la composition sont alors bien contrôlées.

Un avantage d'un procédé selon l'invention réside dans le fait que les paramètres d'un seul brûleur définissent la nature de la flamme et ainsi la configuration du front de fusion sur une distance importante perpendiculairement à l'axe longitudinal du four. Un unique brûleur est suffisant pour fixer la configuration d'une grande portion du front de fusion, ce qui rend le procédé facile à mettre en oeuvre. En outre, le nombre réduit de brûleurs nécessaires pour chauffer l'ensemble du four rend le procédé particulièrement économique, à la fois en ce qui concerne l'investissement initial qu'en ce qui concerne les interventions de maintenance pendant l'exploitation du four.

De préférence, les paramètres du brûleur sont ajustés de sorte qu'une extrémité longitudinale de la flamme ne touche pas le front de fusion de la composition. La flamme est alors courte et la proportion du transfert thermique qui s'effectue sous forme de rayonnement par rapport au transfert thermique total de la flamme est encore augmentée. La portion rectiligne du front de fusion est ainsi encore plus grande.

Les inventeurs ont observé que lorsque les paramètres du brûleur sont ajustés selon l'invention, le brûleur produit une flamme particulièrement peu impulsive. On entend par flamme peu impulsive une flamme entretenue par une injection de fluides, parmi lesquels figurent le combustible et un gaz comprenant de l'oxygène, qui transmet une quantité de mouvement totale limitée auxdits fluides. Cette quantité de mouvement dépend notamment des paramètres géométriques et de fonctionnement du brûleur.

D'autres particularités et avantages de la présente invention apparaîtront dans la description ci-après d'un exemple de mise en oeuvre non limitatif, en référence aux dessins annexés, dans lesquels :

- la figure 1 illustre un four dans lequel est mis en oeuvre un procédé de fusion selon l'invention ; et
- la figure 2 représente est une section du four de la figure 1.

Pour raison de clarté, les dimensions des dispositifs représentés sur les figures ne sont pas en proportion avec des dimensions réelles. En particulier, des dimensions mesurées sur ces figures qui sont associées à des directions réelles distinctes ne sont pas transposées selon un même rapport d'échelle. En outre, des références identiques utilisées dans les deux figures désignent des éléments identiques.

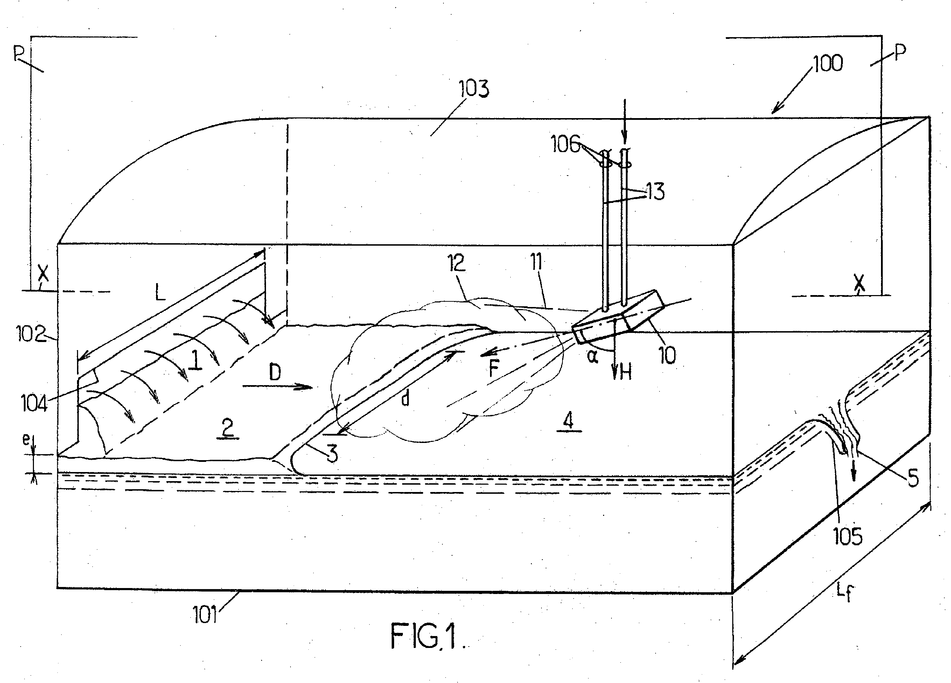

Conformément à la figure 1, un four 100 comprend une cuve 101, des parois latérales 102 et une structure de couverture 103, appelée voûte. Ce peut être, à titre d'exemple, un four de production de verre.

La composition de matières premières est enfournée par une ouverture horizontale 104 pratiquée dans l'une des parois 102, sur une longueur L. Elle est versée dans le four sous forme d'un rideau 1 sensiblement continu et s'étendant sur la longueur L. L est appelée largeur d'enfournement.

La composition fondue forme un bain de liquide 4 contenu dans la cuve 101. Un versoir 105 est aménagé dans la paroi du four opposée à l'ouverture 104, par lequel la matière fondue s'écoule sous forme d'un flux continu de sortie 5.

La matière contenue dans le four 100 se déplace globalement à partir de l'ouverture d'enfournement 104 vers le versoir 105, selon la direction D, appelée direction d'enfournement. La surface du liquide de fusion 4 est découverte dans une partie aval du four 100, et est recouverte dans une partie amont du four 100 par une couche de composition encore solide 2, qui flotte au-dessus du liquide de fusion. Entre ces deux parties, la couche 2 présente une limite nette 3, au niveau de laquelle la composition contenue dans la couche 2 fond et se transforme en liquide qui entre dans le bain de fusion 4. La limite 3 de la couche 2 est le front de fusion de la composition.

Sur la figure 1, X-X désigne l'axe longitudinal central du four 100. Il est horizontal. La cuve 101 a une base rectangulaire et l'axe X-X coupe la largeur $L_f$ du four 100 en un point situé au milieu de celle-ci. P désigne le plan vertical qui comprend l'axe X-X.

Un procédé selon l'invention utilise un brûleur à oxycombustion 10. De façon connue, un tel brûleur produit une flamme à partir d'une injection de combustible, liquide ou gazeux, et d'une injection de comburant constitué par un gaz comprenant au moins 60% d'oxygène en volume. De préférence, le gaz oxygéné comprend au moins 90% d'oxygène en volume. Un tel brûleur à oxycombustion est relativement peu encombrant et léger, par comparaison avec un brûleur à air. Cela rend son installation dans un four particulièrement facile. En particulier, le brûleur 10 peut être disposé à travers des trous 106 percés dans la voûte 103 au-dessus du bain de fusion. Des conduites 13 traversent les trous 106 pour alimenter le brûleur 10 en gaz oxygéné et en combustible. Grâce aux dimensions réduites et au faible poids du brûleur 10, il n'est pas nécessaire de prévoir un ouvreau dans la voûte 103 pour le passage des conduites 13. La conception et la réalisation de la voûte 103 en sont facilitées.

Le brûleur 10 est disposé dans le plan P. Il est dirigé vers la couche de composition 2, de façon à produire un ou plusieurs jet(s) 11 de combustible et de gaz oxygéné, réparti(s) de chaque côté du plan P. Pour cela, le brûleur 10 peut être incliné par rapport à une direction verticale, notée H sur la figure 1 et orientée vers le bas. $\alpha$ désigne l'angle entre une direction moyenne F de sortie des jets produits par le brûleur 10 et la direction H. $\alpha$ est préférentiellement compris entre 30 et 75 degrés, et plus particulièrement entre 45 et 65 degrés. Sur la figure 1, la référence 12 désigne la flamme produite par le brûleur 10.

Le brûleur 10 peut être d'un modèle tel que décrit dans le brevet américain 6 068 468. Un tel brûleur possède plusieurs orifices de sortie de combustible, ainsi que plusieurs orifices de sortie du gaz oxygéné. Il est particulièrement adapté pour obtenir une flamme large et couvrante.

En choisissant convenablement le réglage du brûleur 10, un mode principal de transfert de l'énergie thermique produite par la flamme 12 est adopté, qui procède par rayonnement. De préférence, au moins 60% du transfert thermique généré par la flamme 12 procède par rayonnement. Une partie particulièrement grande du bain de fusion reçoit alors la chaleur produite par la flamme 12. Lorsque le brûleur 10 ainsi réglé est dirigé vers la couche de composition 2, le front de fusion 3 est situé dans la zone d'impact thermique de la flamme 12. Etant donné que cette zone d'impact est large, le front de fusion 3 présente une grande portion rectiligne et perpendiculaire à l'axe X-X, dans une partie du four située en face du brûleur 10. Sur la figure 1, d est la longueur de cette portion rectiligne du front 3.

Le brûleur 10 étant disposé de façon centrée par rapport à la largeur du four 100, le front de fusion 3 présente une configuration symétrique par rapport au plan P. De cette façon, la couche de composition 2 est fondue de la même façon des deux côtés du four 100 par rapport au plan P.

Afin de favoriser encore un mode de chauffage par rayonnement plutôt que par convexion, le brûleur 10 peut être réglé en outre pour générer une flamme 12 qui est courte et lumineuse. Pour cela, la flamme 12 est peu impulsive et présente une zone riche en combustible. L'utilisation d'un brûleur 10 à oxygène, plutôt qu'un brûleur à air, est particulièrement appropriée pour obtenir de telles conditions de combustion. La température est alors particulièrement élevée dans la zone riche en combustible, et le transfert thermique vers la charge du four se produit essentiellement par rayonnement. Le transfert thermique entre la flamme et la couche de composition se produit donc avec une distance d'éloignement de la flamme par rapport à la couche, ce qui rend plus facile l'obtention d'un front de fusion ayant une grande portion rectiligne.

Certains des paramètres du brûleur 10 qui sont ajustés pour mettre en oeuvre un procédé de fusion selon l'invention peuvent être choisis parmi des nombres, des dimensions, des positions et des inclinaisons d'orifices d'injection de fluides dans le four 100, lesdits fluides incluant un combustible et un gaz comprenant de l'oxygène. Ainsi, le brûleur à oxycombustion décrit dans la publication EP-A1-0 754 912 convient particulièrement à la mise en oeuvre du procédé selon l'invention.

Pour obtenir une flamme 12 peu impulsive, certains des paramètres du brûleur 10 sont ajustés de sorte que les fluides injectés dans le four 100 par le brûleur présentent une quantité de mouvement totale comprise entre 0,58 N et 5 N. De préférence, la quantité de mouvement totale de ces fluides est comprise entre 1,2 N et 2,5 N.

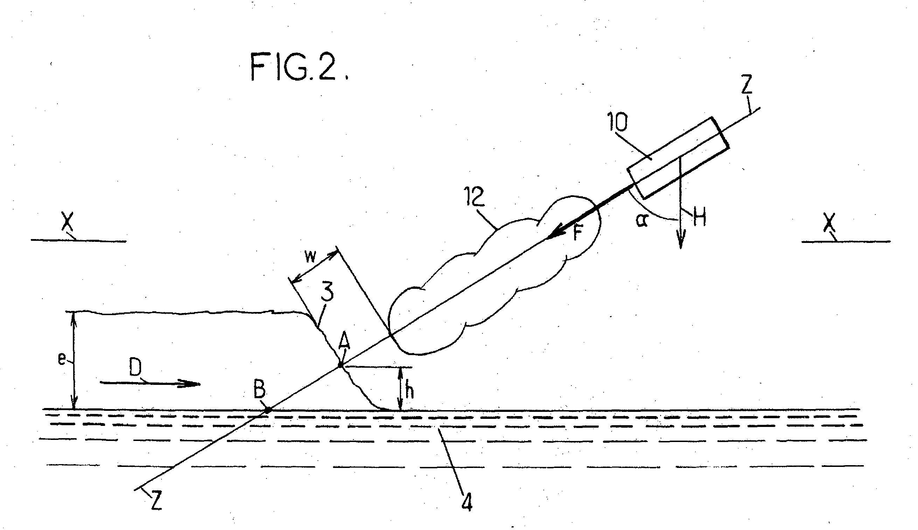

Le figure 2 est une section du four 100 dans le plan P montrant plus précisément les paramètres géométriques du brûleur 10 et de la flamme 12. La flamme 12 est de forme aplatie et répartie de façon symétrique de part et d'autre du plan P. F correspond à la direction de la flamme 12 dans le plan P. L'axe Z-Z, passant par le brûleur 10 et parallèle à la direction F, coupe le front de fusion 3 dans le plan P au point noté A. A est situé à une hauteur, mesurée à partir de la surface du liquide fondu 4, comprise entre le tiers et la moitié de l'épaisseur de la couche de composition 2. w est la distance entre l'extrémité de la flamme 12 et le front de fusion 3. w est non nulle, de sorte que la flamme 12 ne touche pas la couche de composition 2.

Le plan incliné comprenant l'axe Z-Z et une direction horizontale perpendiculaire au plan P contient une section longitudinale de la flamme 12. Il coupe la surface du bain de fusion 4 selon une droite perpendiculaire à l'axe X-X passant par le point B.

Lorsqu'un régime de fusion stable est établi, la relation suivante relie la puissance de chauffe P délivrée par la flamme 12 aux caractéristiques de la couche 2 :

$$P = \Delta H \times \rho^2 \times V$$

où ΔH désigne l'enthalpie moyenne de fusion de la composition, ρ désigne la masse volumique de la composition dans la couche 2 et V est la vitesse d'enfournement. Il est donc possible d'ajuster la puissance P du brûleur 10 en fonction de la tirée désirée dans le versoir 105. Les consommations d'oxygène et de combustible peuvent ainsi être réduites à des valeurs juste suffisantes pour fondre une quantité de composition correspondant à la tirée. A titre d'exemple, il est possible d'injecter 10 Nm³/h de gaz naturel pour 20 Nm³/h d'oxygène par le brûleur 10, pour un enfournement de 12 kg/h de composition pour la fabrication de verre.

Selon un perfectionnement d'un procédé selon l'invention, la position d'avancement du front de fusion 3 à la surface du bain de fusion 4, selon l'axe X-X, peut aussi être utilisée comme critère d'ajustement de certains des paramètres du brûleur 10. En particulier, le débit de combustible, le débit du gaz comprenant de l'oxygène, une pression d'injection du combustible, une pression d'injection du gaz comprenant l'oxygène, ainsi que l'angle α peuvent être ajustés de cette façon.

Eventuellement, le procédé peut comprendre en outre une installation d'un système de détection de la position d'avancement du front de fusion 3 selon l'axe X-X. Certains des paramètres du brûleur peuvent alors être asservis à la position d'avancement du front de fusion qui est détectée.

A titre d'exemple, le système de détection de la position d'avancement du front de fusion 3 peut comprendre un laser (non représenté). Dès que le faisceau du laser est coupé ou altéré par un déplacement du front de fusion 3, un signal de rétroaction est envoyé à une unité de contrôle automatique des paramètres du brûleur 10, de façon à corriger certains des paramètres pour compenser le déplacement du front 3.

Il apparaîtra qu'un procédé de fusion selon l'invention présente de multiples avantages, parmi lesquels on peut rappeler ou citer les suivants :

- le procédé procure des conditions de fusion particulièrement stables ;
- il peut être mis en oeuvre dans des fours de grande capacité ;
- le montage du brûleur est simple et ne nécessite que peu d'aménagements de la voûte du four;
- les coûts d'équipement et de maintenance du four sont réduits ;
- les consommations de combustible et d'oxygène sont réduites ;
- la matière fondue qui est extraite du four est bien homogène ;
- la flamme dirigée contre le front de fusion constitue un écran qui empêche des poussières de composition issues de la couche de se propager vers l'aval du four, à l'extérieur du four et par la cheminée ;
- le procédé est flexible et peut être adapté simplement lorsque des compositions différentes sont successivement fondues dans un même four. Les paramètres du brûleur sont seulement ajustés pour chaque composition, de façon à restituer une forme rectiligne du front de fusion. Eventuellement, ils peuvent aussi être ajustés de façon à déplacer le front de fusion selon la direction d'enfournement jusqu'à une position adaptée pour chaque composition ; et
- le procédé peut être facilement automatisé.

**Revendications**

1. Procédé de fusion d'une composition de matières premières comprenant les étapes suivantes :

- introduire la composition dans un four (100) selon une direction d'enfournement (D) parallèle à un axe central longitudinal du four (X-X), en répartissant la composition de façon sensiblement continue et régulière sur une largeur d'enfournement déterminée (L), afin de former une couche de composition (2) sur la surface du bain de fusion (4), et
- disposer un brûleur à oxycombustion (10) audessus du bain de fusion (4), le brûleur étant dirigé vers la couche de composition (2), de façon à créer un front de fusion (3) de la composition présente dans la couche,

le procédé comprenant en outre un ajustement de paramètres du brûleur (10), effectué de sorte que :

- le brûleur produise une flamme (12) plate ayant une section transversale allongée horizontalement ;
- le plan contenant une section longitudinale de la flamme et une direction horizontale perpendiculaire à l'axe du four (X-X) coupe le front de fusion de la composition (3) à une hauteur (h) comprise entre le tiers et la moitié de l'épaisseur de la couche de composition (e), à partir de la surface du bain de fusion (4), et coupe la surface du bain de fusion (4) selon une droite perpendiculaire à l'axe du four (X-X) ; et
- la flamme (12) produise un transfert thermique au front de fusion de la composition (3) essentiellement par rayonnement.

2. Procédé selon la revendication 1, suivant lequel les paramètres du brûleur (10) sont ajustés de sorte qu'une extrémité longitudinale de la flamme (12) ne touche pas le front de fusion de la composition (3).

3. Procédé selon la revendication 1 ou 2, suivant lequel le brûleur (10) est disposé dans un plan vertical comprenant l'axe central longitudinal du four (X-X).

4. Procédé selon l'une quelconque des revendications précédentes, suivant lequel le brûleur (10) est incliné par rapport à une direction verticale (H).

5. Procédé selon la revendication 4, suivant lequel le brûleur (10) est incliné vers le bas selon un angle (α) compris entre 45 et 65 degrés par rapport à la direction verticale (H).

6. Procédé selon l'une quelconque des revendications précédentes, suivant lequel le brûleur (10) est disposé à travers des trous (106) percés dans une structure de voûte (103) au dessus du bain de fusion (4).

7. Procédé selon l'une quelconque des revendications précédentes, suivant lequel certains paramètres du brûleur (10) sont ajustés de sorte que les fluides injectés dans le four (100) par le brûleur présentent une quantité de mouvement totale comprise entre 0,58 N et 5 N.

8. Procédé selon l'une quelconque des revendications précédentes, suivant lequel certains des paramètres du brûleur (10) sont ajustés en fonction d'une position d'avancement du front de fusion (3) selon l'axe du four (X-X).

9. Procédé selon la revendication 8, suivant lequel les paramètres du brûleur (10) ajustés en fonction de la position d'avancement du front de fusion (3) sont choisis parmi un débit de combustible, un débit de gaz comprenant de l'oxygène, une pression d'injection du combustible, une pression d'injection du gaz comprenant de l'oxygène et un angle (α) d'inclinaison du brûleur (10) par rapport à une direction verticale (H).

10. Procédé selon la revendication 8 ou 9, comprenant en outre une installation d'un système de détection de la position d'avancement du front de fusion (3) selon l'axe du four (X-X), et suivant lequel certains des paramètres du brûleur (10) sont asservis à la position d'avancement du front de fusion détectée.

11. Procédé selon la revendication 10, suivant lequel le système de détection de la position d'avancement du front de fusion (3) comprend un laser.

12. Procédé de fusion selon l'une quelconque des revendications précédentes, utilisé pour la production de verre.

**Patentansprüche**

1. Verfahren zum Schmelzen einer Zusammensetzung aus Rohstoffen, das die folgenden Schritte umfasst:

   - Einführen der Zusammensetzung in einen Ofen (100) in einer Einschießrichtung (D), die zu einer Längsmittelachse des Ofens (X-X) parallel ist, indem die Zusammensetzung im Wesentlichen kontinuierlich und regelmäßig über eine bestimmte Einschießbreite (L) verteilt wird, um eine Zusammensetzungsschicht (2) auf der Oberfläche des Schmelzbades (4) zu bilden, und
   - Anordnen eines Oxyfuel-Brenners (10) oberhalb des Schmelzbades (4), wobei der Brenner auf die Zusammensetzungsschicht (2) gerichtet wird, so dass eine Schmelzfront (3) der in der Schicht vorhandenen Zusammensetzung erzeugt wird,

   wobei das Verfahren ferner das Einstellen von Parametern des Brenners (10) umfasst, das so durchgeführt wird, dass

   - der Brenner eine flache Flamme (12) mit einem horizontal langgezogenen Querschnitt erzeugt;
   - die Ebene, die einen Längsschnitt der Flamme und eine zu der Achse des Ofens (X-X) lotrechte horizontale Richtung enthält, die Schmelzfront der Zusammensetzung (3) in einer Höhe (h) schneidet, die, ausgehend von der Oberfläche des Schmelzbades (4), zwischen dem Drittel und der Hälfte der Dicke der Zusammensetzungsschicht (e) beträgt und die Oberfläche des Schmelzbades (4) in einer zur Achse des Ofens (X-X) lotrechten Geraden schneidet; und
   - die Flamme (12) einen Wärmetransfer zur Schmelzfront der Zusammensetzung (3) im Wesentlichen durch Strahlung erzeugt.

2. Verfahren nach Anspruch 1, bei dem die Parameter des Brenners (10) so eingestellt werden, dass ein Längsende der Flamme (12) die Schmelzfront der Zusammensetzung (3) nicht berührt.

3. Verfahren nach Anspruch 1 oder 2, bei dem der Brenner (10) in einer vertikalen Ebene angeordnet wird, welche die Längsmittenachse des Ofens (X-X) enthält.

4. Verfahren nach einem der vorhergehenden Ansprüche, bei dem der Brenner (10) relativ zu einer vertikalen Richtung (H) geneigt ist.

5. Verfahren nach Anspruch 4, bei dem der Brenner (10) relativ zu der vertikalen Richtung (H) in einem Winkel (α) zwischen 45 und 65 Grad nach unten geneigt ist.

**6.** Verfahren nach einem der vorhergehenden Ansprüche, bei dem der Brenner (10) durch Löcher (106) hindurch angeordnet wird, die in einer Gewölbestruktur (103) oberhalb des Schmelzbades (4) vorgesehen sind.

**7.** Verfahren nach einem der vorhergehenden Ansprüche, bei dem bestimmte Parameter des Brenners (10) so eingestellt werden, dass die in den Ofen (100) durch den Brenner eingespritzten Fluide eine Gesamtbewegungsmenge zwischen 0,58 N und 5 N aufweisen.

**8.** Verfahren nach einem der vorhergehenden Ansprüche, bei dem bestimmte der Parameter des Brenners (10) in Abhängigkeit von einer Vorschubposition der Schmelzfront (3) gemäß der Achse des Ofens (X-X) eingestellt sind.

**9.** Verfahren nach Anspruch 8, bei dem die in Abhängigkeit von einer Vorschubposition der Schmelzfront (3) eingestellten Parameter des Brenners (10) gewählt sind aus einer Brennstoffmenge, einem sauerstoffhaltigen Gasdurchfluss, einem Einspritzdruck des Brennstoffs, einem Einspritzdruck des sauerstoffhaltigen Gases und einem Neigungswinkel ($\alpha$) des Brenners (10) relativ zu einer vertikalen Richtung (H).

**10.** Verfahren nach Anspruch 8 oder 9, umfassend ferner eine Installation eines Systems zur Detektion der Vorschubposition der Schmelzfront (3) gemäß der Achse des Ofens (X-X) und bei dem bestimmte der Parameter des Brenners (10) der detektierten Vorschubposition der Schmelzfront nachgeführt werden.

**11.** Verfahren nach Anspruch 10, bei dem das System zur Detektion der Vorschubposition der Schmelzfront (3) einen Laser umfasst.

**12.** Schmelzverfahren nach einem der vorhergehenden Ansprüche, das zur Herstellung von Glas verwendet wird.

**Claims**

**1.** Method for melting a composition of raw materials, comprising the following steps:

- the composition is introduced into a furnace (100) in a loading direction (D) parallel to a longitudinal central axis (X-X) of the furnace, distributing the composition substantially continuously and uniformly over a defined loading width (L), so as to form a layer of the composition (2) on the surface of the melt (4); and
- an oxyfuel burner (10) is placed above the melt (4), the burner being directed toward the composition layer (2) so as to create a melting front (3) of the composition present in the layer,

the method additionally comprising adjusting the parameters of the burner (10), carried out so that:

- the burner produces a flat flame (12) having a horizontally elongate cross section;
- the plane containing a longitudinal section of the flame and a horizontal direction perpendicular to the axis (X-X) of the furnace intersects the composition melting front (3) at a height (h) of between one third and one half of the thickness (e) of the composition layer measured from the surface of the melt (4), and intersects the surface of the melt (4) along a line perpendicular to the axis (X-X) of the furnace; and
- the flame (12) produces a transfer of heat to the melting front (3) of the composition essentially by means of radiation.

**2.** Method according to claim 1, in which the parameters of the burner (10) are adjusted so that a longitudinal end of the flame (12) does not touch the melting front (3) of the composition.

**3.** Method according to either claim 1 or claim 2, in which the burner (10) is arranged in a vertical plane that includes the longitudinal central axis (X-X) of the furnace.

**4.** Method according to any of the preceding claims, in which the burner (10) is inclined relative to a vertical direction (H).

**5.** Method according to claim 4, in which the burner (10) is inclined downward at an angle ($\alpha$) of between 45° and 65° relative to the vertical direction (H).

**6.** Method according to any of the preceding claims, in which the burner (10) is arranged through holes (106) drilled in a crown structure (103) above the melt (4).

**7.** Method according to any of the preceding claims, in which certain parameters of the burner (10) are adjusted so that the fluids injected into the furnace (100) by the burner have a total momentum of between 0.58 N and 5 N.

**8.** Method according to any of the preceding claims, in which certain parameters of the burner (10) are adjusted according to a position of advance of the melting front (3) along the axis (X-X) of the furnace.

**9.** Method according to claim 8, in which the parameters of the burner (10) adjusted according to the position of advance of the melting front (3) are selected from a fuel flow rate, an oxygen-containing gas flow rate, a fuel injection pressure, an oxygen-containing gas injection pressure and an angle ($\alpha$) of inclination of the burner (10) relative to a vertical direction (H).

**10.** Method according to either claim 8 or claim 9, additionally comprising installing a system for detecting the position of advance of the melting front (3) along the axis (X-X) of the furnace, and in which certain parameters of the burner (10) are slaved to the detected position of advance of the melting front.

**11.** Method according to claim 10, in which the system for detecting the position of advance of the melting front (3) comprises a laser.

**12.** Method for melting according to any of the preceding claims, used for the production of glass.

FIG.1.

EP 1 824 793 B1

# FIG.2.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1319150 A
- EP 0546238 A
- EP 0748981 A
- EP 0754912 A1